# EUROPÄISCHE PATENTANMELDUNG

(11) **EP 2 476 545 A2**
(43) Veröffentlichungstag der Anmeldung: **18.07.2012**
(21) Anmeldenummer: 12150076.3
(22) Anmeldetag: 03.01.2012
(51) Int. Cl.: B30B 7/02, B30B 15/30

(54) **Verfahren zum Durchführen einer Bandlaufkorrektur bei einem Förderband einer Presse und Presse mit Förderband und Bandlaufkorrektur**

(30) Priorität: 14.01.2011 DE 102011008650
(71) Anmelder: Robert Bürkle GmbH, 72250 Freudenstadt (DE)
(72) Erfinder: Damm, Norbert, 76689 Karlsdorf-Neuthardt (DE)
(74) Vertreter: Lemcke, Brommer & Partner

(57) **Zusammenfassung**

Die vorliegende Erfindung betrifft ein Verfahren zum Durchführen einer Bandlaufkorrektur bei einem Förderband 5 einer Presse mit mindestens einer Pressenetage 1, 1', 1 ", 1'''. Diese umfasst eine untere 3 und eine obere Pressplatte 4, die zum Öffnen und Schließen der Pressenetage 1 relativ zueinander bewegbar sind, ein um die untere Pressplatte 3 umlaufendes Förderband 5 zum Ein- und Ausfördern eines Werkstücks in die und aus der Pressenetage 1, sowie mindestens eine, an einer Stirnseite der unteren Pressplatte 5 angeordnete Umlenkrolle 7, 8 für das Förderband 5, die das Förderband 5 von der Oberseite zur Unterseite der unteren Pressplatte 3 und umgekehrt umlenkt. Des weiteren ist die Pressenetage mit einer Spannvorrichtung 6 zum Spannen und Entspannen des Förderbandes 5 versehen, wobei die Umlenkrolle 7 mittels der Spannvorrichtung 6 relativ zur unteren Pressplatte 3 bewegbar ist, und zum Durchführen der Bandlaufkorrektur die Umlenkrolle 7, 8 bedarfsweise axial bewegt wird. Eine entsprechend ausgestaltete Presse ist ebenfalls Gegenstand der vorliegenden Erfindung.

## Beschreibung

Die Erfindung betrifft ein Verfahren zum Durchführen einer Bandlaufkorrektur bei einem Förderband einer Presse mit mindestens einer Pressenetage nach dem Oberbegriff des Anspruchs 1. Die Erfindung betrifft weiterhin eine Presse mit mindestens einer Pressenetage nach dem Oberbegriff des Anspruchs 6.

Eine Presse der vorliegenden Art, bei der das Verfahren der vorliegenden Art durchgeführt wird, umfasst demnach mindestens eine Pressenetage mit einer unteren und einer oberen Pressplatte, die zum Öffnen und Schließen der Pressenetage relativ zueinander bewegbar sind. Zum Ein- und Ausfördern eines zu prozessierenden Werkstücks in die und aus der Pressenetage läuft um die untere Pressplatte ein Förderband um. An mindestens einer Stirnseite der unteren Pressplatte ist jeweils mindestens eine Umlenkrolle vorgesehen, die eine ledigich mitlaufende Umlenkrolle oder auch eine Antriebsrolle sein kann, und die das Förderband von der Oberseite zur Unterseite der unteren Pressplatte und umgekehrt umlenkt. Mindestens eine Umlenkrolle ist mit einer Spannvorrichtung zum Spannen und Entspannen des Förderbandes versehen. Wenn beispielsweise an jeder Stirnseite der unteren Pressplatte jeweils eine Umlenkrolle vorgesehen ist, reicht es aus, wenn nur eine dieser beiden Umlenkrollen mit einer solchen Spannvorrichtung ausgestattet ist. Das Spannen und Entspannen des Förderbandes erfolgt hierbei solcherart, dass die mit der Spannvorrichtung versehene Umlenkrolle mittels der Spannvorrichtung relativ zur unteren Pressplatte bewegbar ist, im wesentlichen also zu ihr hin und von ihr weg bewegt werden kann, so dass das um sie herum laufende Förderband gespannt und entspannt wird. Das Entspannen des Förderbandes nach Beenden einer Transportbewegung stellt sicher, dass das Prozessieren des Werkstücks in der Presse, das währenddessen notwendigerweise auf dem Förderband liegen bleibt, nicht nachteilig von einer Spannung des Förderbandes beeinflusst wird. Eine solche Presse mit Förderband, Umlenkrolle und Spannvorrichtung ist in einer mehretagigen Ausführung beispielsweise in der DE-A-10 2007 025 380 beschrieben.

Wie bei allen Förderbändern ist es auch bei einer Presse der vorliegenden Art nicht unproblematisch, das Förderband in der Laufbahn bzw. in seiner Spur zu halten, da das Förderband während des Betriebs dazu tendiert, quer zu seiner Laufrichtung, also horizontal in Laufrichtung gesehen nach rechts oder nach links, aus der Laufbahn herauszulaufen. Ein solcher horizontaler Verlauf des Förderbandes muss verhindert oder von Zeit zu Zeit korrigiert werden, um eine ansonsten unweigerlich auftretenden Störung im Betrieb des Förderbandes zu vermeiden.

Bei gewöhnlichen Fördervorrichtungen mit Förderbändern, die um Antriebs- und Führungsrollen umlaufen, ist es üblich, diese Rollen tonnenförmig oder doppelkegelförmig auszubilden, um während des Bandlaufs eine Selbstzentrierung des Förderbandes in der Laufbahn zu bewirken. Daneben sind formschlüssige Führungselemente, wie ein keilriemenförmiger Aufsatz auf der Innenseite des Förderbandes, der in Nuten der Antriebs- und Umlenkrollen läuft, bekannt, mit deren Hilfe ein Verlauf des Förderbandes aus seiner Laufbahn verhindert werden kann.

Bei einer Presse der vorliegenden Art werden allerdings meist Förderbänder eingesetzt, die relativ breit und kurz ausgebildet sind, also ein Verhältnis zwischen dem Abstand der beiden Umlenkachsen und der Breite des Förderbandes von weniger als ca. 2:1 vorliegt. Bei solchen verhältnismäßig kurzen und breiten Transportbändern führen die eben genannten konventionellen Maßnahmen zur Bandlaufkorrektur meist nicht zu befriedigenden Ergebnissen, was zu häufigen Störungen führt. Daher ist es bei Pressen der vorliegenden Art üblich geworden, eine aktive Bandlaufsteuerung einzusetzen. Diese wirkt gezielt auf die Spannvorrichtung des Förderbandes ein, um durch ein asymmetrisches Spannen (linksseitig stärker als rechtsseitig oder umgekehrt) einen Verlauf des Förderbandes oder eine erkannte Verlaufstendenz während der Transportbewegung zu korrigieren bzw. zu kompensieren.

Solch eine aktive Bandlaufsteuerung ist allerdings aufwändig. Hinzu kommt, dass für eine bevorzugte Anwendung einer Presse der vorliegenden Art, das Laminieren von im wesentlichen plattenförmigen Werkstücken unter Druck- und Wärmeeinwirkung in einer Vakuumkammer, die mittels ein- oder mehrteiliger Dichtungen zwischen der unteren Pressplatte und der oberen Pressplatte gebildet wird, als Förderbänder wenig nachgiebige Gewebebänder, vorzugsweise aus Aramidfasern, verwendet werden, die wegen des beim Laminieren eingesetzten hochadhäsiven Klebstoffs zusätzlich mit PTFE beschichtet sein müssen. Eine aktive Bandsteuerung für solche Förderbänder muss verhältnismäßig hohe Stellkräfte aufwenden, um die Förderbänder in der Laufbahn zu halten. Dies erhöht die mechanische Belastung sowohl der Spannvorrichtung als auch des Förderbandes selbst, was letztendlich zu einem erhöhten Verschleiß führt.

Bei solchen unnachgiebigen Förderbändern, die hohe Stellkräfte bei der aktiven Bandsteuerung erfordern, besteht außerdem die Gefahr einer Faltenbildung des Förderbandes, da die zur Bandlaufkorrektur aufgebrachten Querkräfte auf das Förderband die lokalen Reibungskräfte zwischen dem Förderband und der Antriebsrolle oder Umlenkrolle übersteigen können. Relativ breite Förderbänder sind von dieser zusätzlichen Gefahr besonders betroffen.

Wenn eine Presse der vorliegenden Art als Mehretagenpresse ausgebildet ist, ergeben sich zusätzliche Schwierigkeiten bei einer herkömmlichen aktiven Bandlaufsteuerung. Denn bei einer Mehretagenpresse ist jeweils die obere Pressplatte einer Pressenetage gleichzeitig die untere Pressplatte der nächsthöheren Pressenetage. Der Untertrum des um die untere Pressplatte umlaufenden Förderbandes einer Pressenetage läuft dementsprechend unterhalb der oberen Pressplatte einer weiteren, darunter befindlichen Pressenetage durch diese hindurch. Wird nun eine aktive Bandsteuerung verwendet, kommt es vor, dass durch die asymmetrischen Spannungsverhältnisse im Förderband eine Seite desselben durchhängt, während die andere Seite gespannt ist. Ein solcher Durchhang stört naturgemäß den Transport des Werkstücks in die und aus der darunterliegenden Pressenetage und kann sogar zur Produktion von Ausschuss führen, wenn zu prozessierende Werkstücke beim Einfördern von einem durchhängenden Untertrum gestreift werden. Diese Problematik verhindert es sogar ganz, Mehretagen-Laminierpressen mit längeren Pressenkammern und dementsprechend höheren Durchsatzleistungen zu bauen, denn dann würden die Durchhänge zu groß werden.

Ausgehend von diesem Stand der Technik liegt der vorliegenden Erfindung die Aufgabe zugrunde, ein Verfahren zum Durchführen einer Bandlaufkorrektur bei einem Förderband einer Presse der eingangs genannten Art sowie eine Presse mit Bandlaufkorrektur vorzuschlagen, mit dem bzw. bei der die Bandlaufkorrektur einfacher und effizienter sowie mit geringerer Bandbelastung erfolgen kann.

Gelöst ist diese Aufgabe durch ein Verfahren mit den Merkmalen des Anspruchs 1 sowie durch eine Presse mit den Merkmalen des Anspruchs 6.

Bevorzugte Weiterbildungen des erfindungsgemäßen Verfahrens finden sich in den Ansprüchen 2 bis 5; bevorzugte Ausgestaltungen der erfindungsgemäßen Presse sind in den Ansprüchen 7 bis 10 niedergelegt.

Der Kern der vorliegenden Erfindung liegt demnach darin, dass zum Durchführen einer Bandlaufkorrektur die mindestens eine vorhandene Umlenkrolle axial bewegt werden kann, d.h. quer zur Richtung der Transportbewegung des Förderbandes.

Da der mit der Bandlaufkorrektur zu korrigierende horizontale Verlauf des Förderbandes letztendlich nichts anderes als ein allmähliches Verschieben der axialen Position des Förderbandes auf der Umlenkrolle ist, kann ein solcher Verlauf durch axiale Bewegung der Umlenkrolle korrigiert werden, ohne die Spannvorrichtung zwingend - wie bisher - asymmetrisch bzw. einseitig zu spannen. Die Spannvorrichtung kann vielmehr vorteilhafterweise ausschließlich parallel und damit gleichmäßig für eine Bandspannung sorgen, die nur ausreichen muss, um den schlupffreien Antrieb des Förderbands und das störungsfreie Ein- und Ausfördern der Werkstücke sicherzustellen. Höhere einseitige Spannungen, um eine Bandlaufkorrektur durchzuführen, sind nicht mehr zwingend einzuplanen. Dies bedeutet folglich auch, dass das Förderband mit der vorliegenden Erfindung aus Materialien bestehen kann, die die bislang üblichen hohen einseitigen Spannungen zur Bandlaufkorrektur nicht aushalten, jedoch an sich kostengünstiger und/oder für den Einsatzzweck besser geeignet sind.

Die erfindungsgemäße axiale Bewegbarkeit der Umlenkrolle ermöglicht verschiedene Konzepte zur Verlaufskontrolle und Bandlaufkorrektur des Förderbandes. Eine dieser Möglichkeiten besteht darin, auf einen Verlauf des Förderbandes mit einer axialen Bewegung der Umlenkrolle in Echtzeit zu antworten, die dem Verlauf des Förderbandes entgegenwirkt. Eine Rückstellung der Umlenkrolle in eine Neutralposition kann dann vorzugsweise bei geschlossener Pressenetage erfolgen, wenn das Förderband zwischen der unteren und der oberen Pressplatte geklemmt ist. In diesem Zustand führt eine axiale Bewegung zu einer Verschiebung der Oberfläche der Umlenkrolle und des Förderbandes gegeneinander, wodurch die Lage des Förderbandes auf der Umlenkrolle dann ebenfalls wieder in die Neutralstellung verändert wird.

Ein Gegeneinander-Verschieben von Umlenkrolle und Förderband kann auch dann leicht erfolgen, wenn das Förderband entspannt ist und die Reibung zwischen dem Förderband und der zu bewegenden Umlenkrolle infolgedessen deutlich herabgesetzt ist.

Wenn sowohl das Förderband entspannt als auch in der geschlossenen Pressenetage geklemmt ist, wie dies beispielsweise bei Laminierpressen der Fall ist, kann eine axiale Bewegung der Umlenkrolle mit dem Ziel, die Position des Förderbandes auf der Umlenkrolle zu verändern, besonders effizient durchgeführt werden, da das Förderband in diesem Zustand dann gar nicht mehr an der Umlenkrolle anliegt, sondern eine lockere Schlaufe um dieses herum bildet.

Die oben beschriebene aktive Echtzeit-Steuerung der erfindungsgemäßen axialen Bewegung der Umlenkrolle entsprechend dem momentanen horizontalen Verlauf des Förderbandes, gegebenenfalls und bevorzugt mit bedarfsweisen Rücksetzbewegungen der Umlenkrolle in eine Neutralstellung unter Verschieben der Position des Förderbandes auf der Umlenkrolle, gewährleistet eine mehr oder weniger allzeit exakte Spurhaltung des Förderbandes in der Pressenetage. Auf der anderen Seite ist eine solche Echtzeit-Steuerung recht aufwendig.

Im Rahmen der vorliegenden Erfindung ist es daher bevorzugt, einen horizontalen Verlauf des Förderbandes nicht in Echtzeit durch eine axiale Gegenbewegung der axial bewegbaren Umlenkrolle zu kompensieren, sondern einen Verlauf bis zu einem - vorzugsweise von Bandkantensensoren zu detektierenden - Schwellenwert zuzulassen und erst beim nächsten Stillstand des Förderbandes eine Bandlaufkorrektur dahingehend durchzuführen, dass die axial bewegbare Umlenkrolle um einen voreingestellten Wert, der in etwa dem Schwellenwert des Bandverlaufs entsprechen kann, axial zu versetzen, um die Position des Förderbandes auf der Umlenkrolle zu verschieben, vorzugsweise auf etwa eine mittige Position. Beim Wiederanlaufen der Transportbewegung des Förderbandes kann dann der axiale Versatz der Umlenkrolle durch axiales Zurückbewegen derselben in eine Neutralstellung wieder rückgängig gemacht werden, wodurch das Förderband ebenfalls wieder mit in die Neutralstellung mitgenommen und der Verlauf des Förderbands korrigiert wird. Eine solche Bandlaufkorrektur kann mit einfachsten steuerungstechnischen Mitteln, nämlich voreingestellten axialen Bewegungen der Umlenkrolle und Bandkantensensoren durchgeführt werden, und sie erfordert vorteilhafterweise immer nur dann eine Aktion, wenn der Schwellenwert eines Verlaufs des Förderbandes überschritten wird, eine Korrektur also erforderlich ist.

Wie oben im Zusammenhang mit der aktiven Steuerung einer axialen Bewegung der Umlenkrolle beschrieben, ist es auch hier sehr vorteilhaft, den axialen Versatz der Umlenkrolle gegenüber dem Förderband dann vorzunehmen, wenn das Förderband entspannt ist oder wenn es in der geschlossenen Pressenetage geklemmt ist, oder besonders bevorzugt wenn es geklemmt und entspannt ist. Denn dann kann ein axialer Versatz zwischen der Umlenkrolle und dem Förderband besonders leicht herbeigeführt werden.

Die axiale Bewegung der axial beweglichen Umlenkrolle kann im Rahmen der vorliegenden Erfindung durch elektrische, pneumatische oder hydraulische Stellantriebe erfolgen. Besonders einfach und robust wird dies umgesetzt, wenn die axial bewegbare Umlenkrolle federelastisch in ihre axiale Ruhestellung bewegt wird, beispielsweise durch mechanische Schraubenfedern, während bei einer Ansteuerung eines Verstellantriebs, der vorzugsweise fluidisch, also pneumatisch oder hydraulisch betätigt wird, der oben erwähnte axiale Versatz der Umlenkrolle aus ihrer axialen Ruhestellung heraus in die gewünschte Richtung hervorgerufen wird. Wenn also beispielsweise ein Bandkantensensor detektiert, dass das Förderband einen Schwellenwert für einen seitlichen Verlauf überschritten hat, kann abgewartet werden, bis das Förderband steht, sowie vorzugsweise entspannt und in der Pressenetage geklemmt ist, wonach dann der axiale Verstellantrieb aktiviert wird, der die Umlenkrolle in die Richtung des detektierten Verlaufs des Förderbandes axial bewegt. Hierdurch ergibt sich eine Verschiebung zwischen der Umlenkrolle und dem Förderband. Nach Öffnen der Presse und Spannen des Förderbandes, jedenfalls aber nach Anlaufen der Transportbewegung des Förderbandes wird der axiale Verstellantrieb der Umlenkrolle nicht mehr angesteuert, so dass diese aufgrund der federelastischen Rückstellkraft sich allmählich in ihre axiale Ruhestellung bewegt und das Förderband dorthin mitnimmt.

Anhand dieser beispielhaften Beschreibung einer Möglichkeit der Ausgestaltung des erfindungsgemäßen Verfahrens wird deutlich, dass eine Bandlaufkorrektur jeweils nur bei Bedarf ausgeführt wird und vor allem keine zusätzliche Taktzeit benötigt, der Arbeitstakt der Presse also nicht verlängert wird.

Ein Ausführungsbeispiel für eine erfindungsgemäße Presse ist im folgenden anhand der beigefügten Zeichnungen beispielhaft näher beschrieben und erläutert, wobei auch bevorzugte Weiterbildungen der vorliegenden Erfindung erwähnt sind. Es zeigen:
- Figur 1: eine schematische seitliche Darstellung einer Mehretagenpresse, bereit zum Be- oder Entladen;
- Figur 2: eine schematische Frontansicht eines Teils einer Pressenetage der Presse aus Figur 1, in drei unterschiedlichen Verfahrensschritten a, b und c;
- Figur 3: eine schematische, halb geschnittene Darstellung einer axial verstellbaren Umlenkrolle in einer ersten Ausführung, in drei unterschiedlichen Verfahrenszeitpunkten a, b und c;
- Figur 4: eine schematische, halb geschnittene Darstellung einer Umlenktrommel in einer zweiten Ausführung, in zwei verschiedenen Verfahrenszeitpunkten a und b.

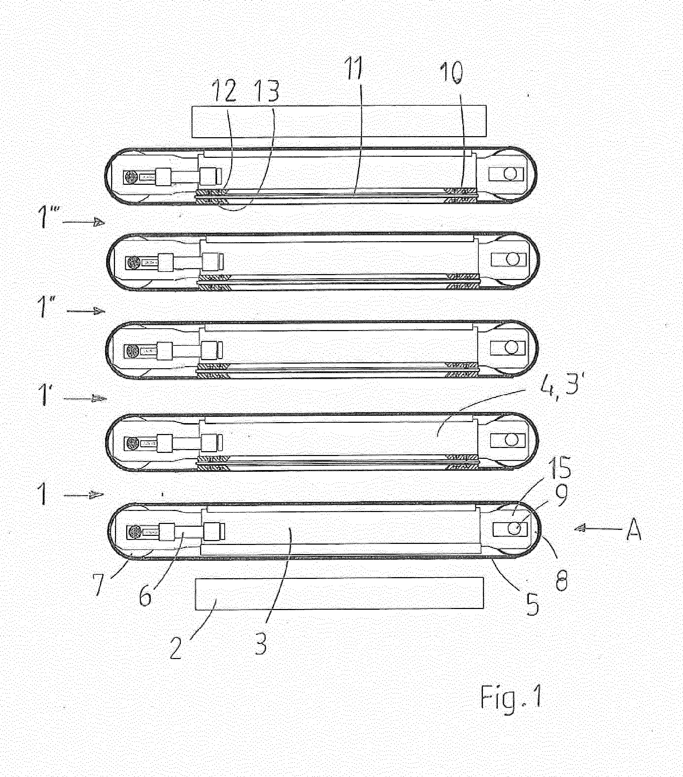

Figur 1 zeigt in einer schematischen seitlichen Darstellung eine Presse mit insgesamt vier Pressenetagen 1, 1', 1'' und 1''', die in einem Pressenrahmen 2 vertikal zusammengefahren und auseinandergefahren werden können. Jede Pressenetage 1 besteht aus einer unteren Pressplatte 3 und einer oberen Pressplatte 4. Um die untere Pressplatte 3 läuft ein Förderband 5 zum Be- und Entladen der Pressenetage 1 um. Eine Spannvorrichtung 6, bestehen im wesentlichen aus einer pneumatischen Kolben-Zylinder-Einheit, die einerseits an der unteren Pressplatte 3 und andererseits an der Achse einer Umlenkrolle 7 des Förderbandes 5 angebracht ist, sorgt dafür, dass das Förderband 5 unter Spannung um die Umlenkrolle 7 und eine an der gegenüberliegenden Stirnseite der unteren Pressplatte 3 fest angebrachten Antriebsrolle 8, die auch eine Umlenkrolle im Sinne der vorliegenden Beschreibung ist, umläuft, um ein (hier nicht dargestelltes) Werkstück in die Pressenetage 1 einzufahren oder dieses aus der Pressenetage 1 auszufahren.

Bei dem vorliegenden Ausführungsbeispiel einer mehretagigen, erfindungsgemäß ausgestalteten Presse handelt es sich um eine Laminierpresse zum Laminieren von Photovoltaik-Modulen. Dementsprechend trägt die jeweils obere Pressplatte 4, die gleichzeitig die untere Pressplatte 3' der jeweils darüber angeordneten Pressenetage 1' ist, an ihrer Unterseite einen Doppelrahmen 10, in den eine flexible Membran 11 eingespannt ist. Der Doppelrahmen 10 bildet mit oberen 12 und unteren Dichtungen 13, die jeweils gegen die untere Pressplatte 3 bzw. die obere Pressplatte 4 abdichten, zusammen mit den angrenzenden Pressplatten 3, 4 eine Vakuumkammer mit (nicht dargestellten) Kanälen zum Evakuieren und/oder Druckbeaufschlagen eines unterhalb der Membran 11 gebildeten Produktraums und eines oberhalb der Membran 11 gebildeten Druckraums.

Figur 1 zeigt die geöffnete Presse, die zum Beladen mit Werkstücken bereit ist. Die Förderbänder 5 sind mittels ihrer Spannvorrichtungen 6 nur so weit symmetrisch gespannt, dass die Friktion der Förderbänder 5 auf den Antriebsrollen 8 ausreicht, um eine definierte Transportbewegung zum Einfahren der Werkstücke durchzuführen. Aufgrund der symmetrischen Spannung der Förderbänder 5 hängt keines derselben linksseitig oder rechtsseitig durch, so dass der Einfahrweg für die Werkstücke in alle Pressenetagen 1 frei ist.

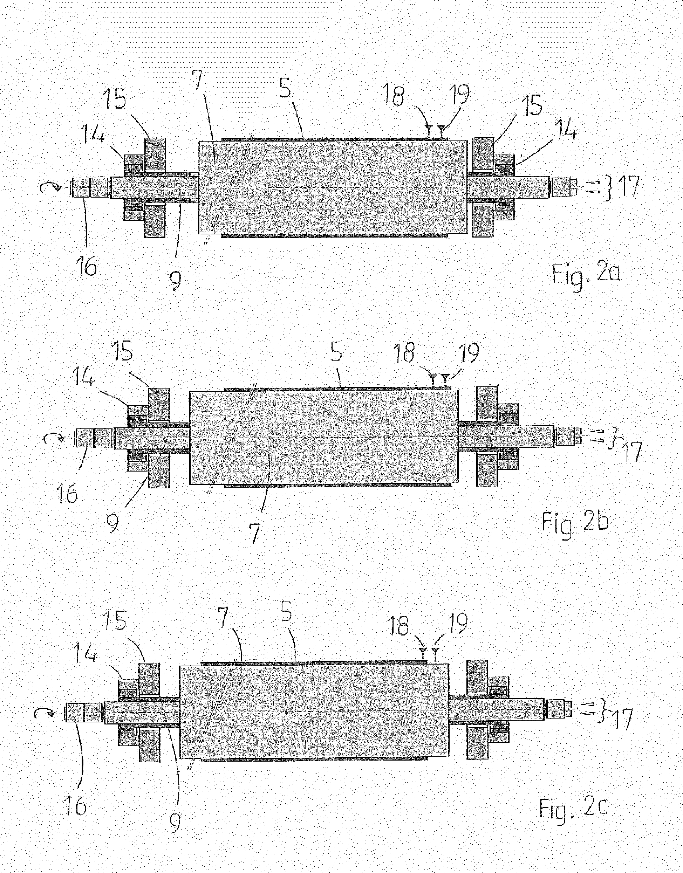

Die Figuren 2a, 2b und 2c zeigen eine Draufsicht in Richtung des Pfeils A aus Figur 1 auf die untere Pressplatte 3 der unteren Pressenetage 1, wiederum in einer schematischen Darstellung in drei unterschiedlichen Phasen bei der Durchführung der erfindungsgemäßen Bandlaufkorrektur.

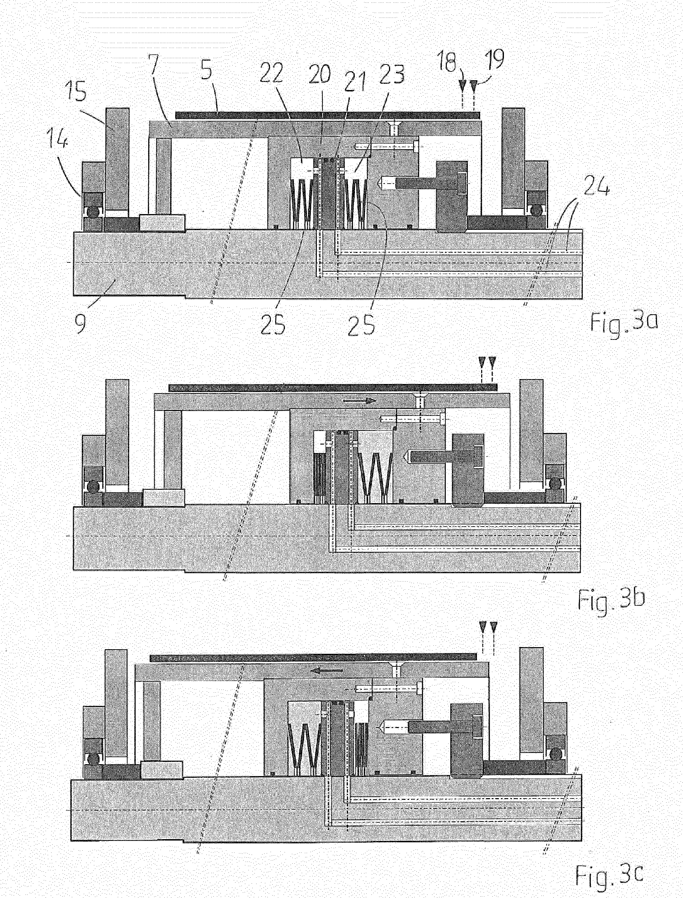

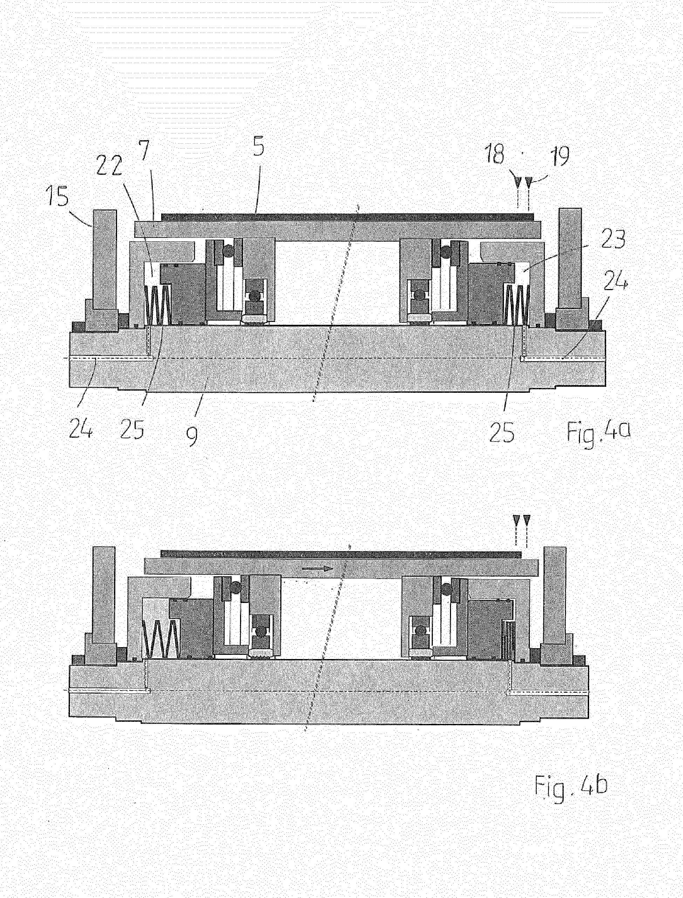

Hier ist verdeutlicht, dass die Umlenkrolle 7 axial beweglich auf einer Achse 9 sitzt, die ihrerseits axial unbeweglich mittels Lagern 14 in einer Achsaufnahme 15 der unteren Pressplatte 3 befestigt ist. Auf einem Ende der Achse 9 sitzt ein Drehantrieb 16 zur Erzeugung der Transportbewegung des Förderbands 5, welches um die Umlenkrolle 7 umläuft und diese zur Antriebsrolle macht. Am anderen Ende der Achse 9 befindet sich eine Druckluft-Drehdurchführung 17 zur Versorgung eines Verstellantriebs zur axialen Bewegung der Umlenkrolle 7 auf deren Achse 9. Wie ein solcher Stellantrieb aussehen kann, wird anhand der Figuren 3 und 4 verdeutlicht.

Lediglich angedeutet sind zwei Bandkantensensoren 18 und 19, die einen horizontalen Verlauf des Förderbands 5 gegenüber der unteren Pressplatte 3 detektieren. Ein solcher horizontaler Verlauf des Förderbands 5 ist in Figur 2a bereits erfolgt; das Förderband 5 umschlingt die Umlenkrolle 7 nicht mehr mittig, sondern horizontal nach rechts verschoben. Die Umlenkrolle 7 befindet sich hierbei in einer mittigen axialen Ruhestellung. In der Situation der Figur 2a melden die Bandkantensensoren 18 und 19 den erfolgten Verlauf des Förderbands 5; da beide Bandkantensensoren 18, 19 ein Förderband detektieren, handelt es sich um einen Verlauf nach rechts.

Nachdem die Transportbewegung des Förderbands 5 abgeschlossen, die Spannvorrichtung 6 gelockert und die Presse geschlossen worden ist, wurde nun, wie Figur 2b zeigt, der (nicht dargestellte) Stellantrieb innerhalb der Achse 9 angesteuert, und zwar so, dass er die Umlenkrolle 7 axial nach rechts verschoben hat. Da das Förderband 5 zum einen in der geschlossenen Pressenetage geklemmt ist und das Förderband 5 zum anderen wegen der deaktivierten Spannvorrichtung 6 eine entspannte lockere Schlaufe um die Umlenkrolle 7 bildet, führte die axiale Bewegung der Umlenkrolle 7, wie in Figur 2b dargestellt, zu einem Verschieben der axialen Position des Förderbands 5 auf der Umlenkrolle 7, und zwar hier bis zu der ursprünglichen mittigen Anordnung des Förderbands 5 auf der Umlenkrolle 7. Allerdings hat sich durch diesen axialen Versatz der Umlenkrolle 7 die horizontale Position des Förderbands 5 relativ zur Pressenetage 1 noch nicht geändert. Es sind nun nur das Förderband 5 und die Umlenkrolle 7 gleichzeitig seitlich versetzt.

Daher wurde, wie Figur 2c zeigt, beim Wiederanlaufen der Transportbewegung des Förderbands 5 die Umlenkrolle 7 wieder zurück in ihre mittige, axiale Ruhestellung verschoben, wobei sie das Förderband 5 mitnahm, so dass dieses auch wieder in einer mittigen Ruhestellung relativ zur Pressenetage steht. Die Bandlaufkorrektur ist somit abgeschlossen.

Wie Figur 2c außerdem zeigt, liegt nun die rechte Bandkante des Förderbandes 5 zwischen den beiden Bandkantensensoren 18, 19 und somit innerhalb der vorgegebenen Toleranz für einen Verlauf des Förderbands 5 relativ zur Pressenetage 1. Würde der linke Bandkantensensor 18 wie der rechte Bandkantensensor 19 kein Förderband 5 mehr detektieren, würde eine umgekehrt ablaufende Bandlaufkorrektur durchgeführt werden, indem die Umlenkrolle 7 beim stillstehenden Förderband 5 nicht nach rechts, sondern nach links axial versetzt würde.

Es ist vorteilhaft, jedoch nicht zwingend, dass die Umlenkrollen 7 an beiden Stirnseiten der unteren Pressplatte 3, also nicht nur die in den Figuren 2 dargestellte Antriebsrolle 8, sondern auch die mitlaufende Umlenkrolle 7 gleichermaßen axial verstellbar sind, um eine Bandlaufkorrektur durchführen zu können.

Die Figuren 3a, 3b und 3c zeigen in einer schematischen Darstellung das "Innenleben" der Umlenkrolle 7, die in den Figuren 2a, 2b und 2c dargestellt ist, und zwar wiederum in denjenigen Phasen des Verfahrens, die auch in Figur 2 dargestellt sind. Wie ersichtlich, ist im Inneren der Umlenkrolle 7 ein Stellantrieb zur axialen Verstellung der Umlenkrolle 7 angeordnet, bestehend aus einem an der Umlenkrolle 7 befestigten, axial verschiebbaren Druckzylinder 20, dessen Druckkammer mittels einer axial nicht verschiebbar an der Achse 9 befestigten Scheibe 21 in eine linke 22 und eine rechte Druckkammer 23 unterteilt wird. Mittels zweier Druckkanäle 24 können die beiden Druckräume 22, 23 mit einem Druckmedium, hier mit Druckluft, beaufschlagt werden. In den beiden Druckräumen 22, 23 ist jeweils eine mechanische Druckfeder 25 vorhanden, die den Druckzylinder 20 mittels einer elastischen Rückstellkraft in seine in Figur 3a gezeigte axiale Ruhestellung bringt, sobald die beiden Druckkammern 22, 23 nicht mit einem Druckfluid beaufschlagt sind.

Figur 3a zeigt nun die in Figur 2a bereits dargestellte Phase, in der sich die Umlenkrolle 7 und mit ihr der Stellantrieb in ihrer axialen Ruhestellung befindet, während das Förderband 5, detektiert von den Bandkantensensoren 18, 19, nach rechts verlaufen ist.

In der in Figur 3b gezeigten Phase wurde die rechte Druckkammer 23 des Druckzylinders 20 mit Druckluft beaufschlagt, während die Luft aus der linken Druckkammer 22 über die Druckkanäle 24 frei entweichen konnte. Hierdurch hat der Druckzylinder 20 und mit ihm die Umlenkrolle 7 eine axiale Versetzbewegung nach rechts durchgeführt, wodurch das Förderband 5 wieder mittig auf der Umlenkrolle 7 zu liegen kam.

Die umgekehrte Situation zeigt Figur 3c: Hier wurde die linke Druckkammer 22 mit Druckluft beaufschlagt, während die rechte Druckkammer 23 drucklos gestellt wurde, so dass die Umlenkrolle 7 eine axiale Versetzbewegung nach links durchgeführt hat. Werden nun beide Druckkammern 22, 23 des Druckzylinders 20 druckfrei gestellt, drücken die beiden Druckfedern 25 den Druckzylinder 20 allmählich wieder in seine mittige axiale Ruhestellung, wie sie in Figur 3a gezeigt ist.

Die Figuren 4a und 4b zeigen schließlich eine andere Ausführung des axialen Stellantriebs für die Umlenkrolle 7, wobei Figur 4a die Umlenkrolle 7 in einer axialen Ruhestellung zeigt, während in Figur 4b die Umlenkrolle 7 nach rechts versetzt worden ist. Hier sind die linke 22 und rechte Druckkammer 23 an die Stirnseiten der Umlenkrolle 7 verlegt und insofern voneinander getrennt, enthalten jedoch wiederum jeweils eine Druckfeder 25. Die Wirkungsweise dieses Stellantriebs ist insofern gleich wie in den Figuren 3a, 3b und 3c, so dass auf die dortige Beschreibung Bezug genommen werden kann.

Abschließend sei angemerkt, dass der axiale Stellantrieb gemäß den Anforderungen und örtlichen Gegebenheiten auch völlig anders ausgestaltet sein kann, beispielsweise als elektrischer Stellmotor oder Spindelantrieb oder pneumatischer Schubstangenantrieb und dergleichen mehr.

## Patentansprüche

1. Verfahren zum Durchführen einer Bandlaufkorrektur bei einem Förderband (5) einer Presse mit mindestens einer Pressenetage (1, 1', 1'', 1'''), umfassend eine untere (3) und eine obere Pressplatte (4), die zum Öffnen und Schließen der Pressenetage (1) relativ zueinander bewegbar sind, ein um die untere Pressplatte (3) umlaufendes Förderband (5) zum Ein- und Ausfördern eines Werkstücks in die und aus der Pressenetage (1), sowie mindestens eine, an einer Stirnseite der unteren Pressplatte (3) angeordnete Umlenkrolle (7, 8) für das Förderband (5), die das Förderband (5) von der Oberseite zur Unterseite der unteren Pressplatte (3) und umgekehrt umlenkt, und die mit einer Spannvorrichtung (6) zum Spannen und Entspannen des Förderbandes (5) versehen ist, wobei die Umlenkrolle (7) mittels der Spannvorrichtung (6) relativ zur unteren Pressplatte (3) bewegbar ist,
**dadurch gekennzeichnet,**
**dass** zum Durchführen der Bandlaufkorrektur die Umlenkrolle (7, 8) bedarfsweise axial bewegt wird.

2. Verfahren nach Anspruch 1,
**dadurch gekennzeichnet,**
**dass** ein Teil der axialen Bewegung der Umlenkrolle (7, 8) im entspannten Zustand des Förderbandes (5) durchgeführt wird, um die Umlenkrolle (7, 8) und das Förderband (5) gegeneinander zu verschieben und hierdurch die Lage des Förderbandes (5) auf der Umlenkrolle (7, 8) zu verändern.

3. Verfahren nach Anspruch 2,
**dadurch gekennzeichnet,**
**dass** zum Durchführen der Bandlaufkorrektur das Förderband (5) zunächst entspannt und dann die Umlenkrolle (7, 8) axial bewegt wird, um die Umlenkrolle (7, 8) und das Förderband (5) gegeneinander zu verschieben und hierdurch die Lage des Förderbandes (5) auf der Umlenkrolle (7, 8) zu verändern, wonach das Förderband (5) wieder gespannt wird und die Umlenkrolle (7, 8) vor und/oder während einer Transportbewegung des Förderbands (5) wieder axial zurückbewegt wird.

4. Verfahren nach mindestens einem der Ansprüche 1 bis 3,
**dadurch gekennzeichnet,**
**dass**, um die Umlenkrolle (7, 8) und das Förderband (5) gegeneinander zu verschieben und hierdurch die Lage des Förderbandes (5) auf der Umlenkrolle (7, 8) zu verändern, eine axiale Bewegung der Umlenkrolle (7, 8) im geschlossenen Zustand der Pressenetage (1) erfolgt, wobei das Förderband (5) zwischen der unteren und der oberen Pressplatte (3, 4) geklemmt ist.

5. Verfahren nach mindestens einem der Ansprüche 1 bis 4,
**dadurch gekennzeichnet,**
**dass** ein Verlauf des Förderbandes (5) während dessen Transportbewegung zumindest zum Teil durch eine axiale Bewegung der Umlenkrolle (7, 8) ausgeglichen wird

6. Presse, umfassend mindestens eine Pressenetage (1, 1', 1", 1''') mit einer unteren (3) und einer oberen Pressplatte (4), die zum Öffnen und Schließen der Pressenetage (1) relativ zueinander bewegbar sind, mit einem um die untere Pressplatte (3) umlaufenden Förderband (5) zum Ein- und Ausfördern eines Werkstücks in die und aus der Pressenetage (1), und mit mindestens einer, an einer Stirnseite der unteren Pressplatte (3) angeordneten Umlenkrolle (7, 8) für das Förderband (5), die das Förderband (5) von einer Oberseite zu einer Unterseite der unteren Pressplatte (3) und umgekehrt umlenkt, und die mit einer Spannvorrichtung (6) zum Spannen und Entspannen des Förderbandes (5) versehen ist, wobei die Umlenkrolle (7) mittels der Spannvorrichtung (6) relativ zur unteren Pressplatte (3) bewegbar ist,
**dadurch gekennzeichnet,**
**dass** die Umlenkrolle (7, 8) axial bewegbar ausgebildet ist, um eine Bandlaufkorrektur des Förderbandes (5) durchzuführen.

7. Presse nach Anspruch 6,
**dadurch gekennzeichnet,**
**dass** die Spannvorrichtung (6) und die Umlenkrolle (7, 8) in ihren Bewegungen derart korreliert sind, dass ein Teil der axialen Bewegung der Umlenkrolle (7, 8) im entspannten Zustand des Förderbandes (5) durchgeführt wird, um die Umlenkrolle (7, 8) und das Förderband (5) gegeneinander zu verschieben und hierdurch die Lage des Förderbandes (5) auf der Umlenkrolle (7, 8) zu verändern.

8. Presse nach Anspruch 7,
**dadurch gekennzeichnet,**
**dass** das Förderband (5) im geschlossenen Zustand der Pressenetage (1) zwischen der unteren und der oberen Pressplatte (3, 4) geklemmt ist.

9. Presse nach mindestens einem der Ansprüche 6 bis 8,
**dadurch gekennzeichnet,**
**dass** die Umlenkrolle (7, 8) mit einem fluidischen Antrieb (20, 21) oder mit einem elektro-mechanischen Spindelantrieb zum Erzeugen einer axialen Bewegung versehen ist.

10. Presse nach mindestens einem der Ansprüche 6 bis 9,
**dadurch gekennzeichnet,**
**dass** die Umlenkrolle (7, 8) mit einer federelastischen Rückstellkraft (25) beaufschlagt ist, die sie in eine axiale Ruhestellung bewegt.
